Europäisches Patentamt

European Patent Office

Office européen des brevets

(11) Publication number: **0 244 899**
**A1**

## EUROPEAN PATENT APPLICATION

(21) Application number: **87200742.2**

(22) Date of filing: **17.04.87**

(51) Int. Cl.⁴: **A01F 15/00**

(30) Priority: **08.05.86 US 860971**

(43) Date of publication of application:
**11.11.87 Bulletin 87/46**

(84) Designated Contracting States:
**DE FR GB**

(71) Applicant: **NEW HOLLAND INC.**
**500, Diller Avenue**
**New Holland Pennsylvania 17557(US)**

(72) Inventor: **Jennings, Richard E.**
**Route 6**
**Manheim, PA 17545(US)**

(74) Representative: **Vandenbroucke, Alberic T.J.**
**NEW HOLLAND N.V. Leon Claeysstraat, 3A**
**B-8210 Zedelgem(BE)**

(54) **Round baler apron tensioning system.**

(57) A system for tensioning the bale forming apron
(50) of a round baler is disclosed. This apron ten-
sioning system includes first and second pairs of
drive sprockets (40, 48) for moving the apron (50).
The first pair of drive sprockets (40) are driven at a
first speed, and the second pair of drive sprockets
(48) are driven at a second speed which is slightly
slower than the first speed. This differential in
sprocket speeds tensions the inner course (50a) of
the apron (50) extending between the first and sec-
ond pairs of drive sprockets (40, 48). The system
also includes a slip clutch assembly (84) for tem-
porarily disengaging the second pair of drive sprock-
ets (48) from being driven at the second speed
whenever the tension in the inner course (50a) of the
apron (50) reaches a preset limit.

Fig. 1

**EP 0 244 899 A1**

# ROUND BALER APRON TENSIONING SYSTEM

This invention relates generally to roll baling machines typically referred to as "round balers" which form cylindrical roll bales of crop material. In particular, this invention relates to a system for tensioning the bale forming aprons of such roll baling machines.

U.S. Patent No. 4,343,141 discloses a round baler of the expandable chamber type having a bale forming apron which consists of endless chains connected together at spaced intervals along their length by transverse bars or slats. A system including coil spring assemblies connected to a pivotally mounted arm assembly tensions the bale forming apron in order to provide the necessary compression for acceptable bale formation and density. U.S. Patent No. 4,426,833 discloses another round baler of the expandale chamber type wherein a system including air spring assemblies connected to a rotatable arm assembly tensions a bale forming apron. While the above-mentioned apron tensioning systems have been used successfully on round balers for several years, they have become increasingly expensive.

Therefore, it is an object of the present invention to provide a system for tensioning a bale forming apron of a round baler which is equally efficient as, or more efficient than known systems using coil spring assemblies or air spring assemblies for controlling the density of bales being formed while providing longer life of the bale forming apron on the one hand and which is less expensive than such known systems on the other hand.

According to the invention, a roll baling machine is provided which comprises :

-an apron for forming roll bales of crop material;

-first and further sprocket means engaging said apron at spaced-apart locations; said apron having an inner course thereof extending between said first and further sprocket means for operative engagement with a bale being formed in the baler and being expandable in length during bale formation; and

-drive means operatively coupled to the first sprocket means for driving said first sprocket means to thereby move the apron in a predetermined direction, and which further is

characterized in that :

-braking means are operatively coupled to the further sprocket means in order to maintain tension in the inner course of the apron to thereby control the density of bales formed in the baler.

Preferably, the braking mechanism is adjustable in order to permit adjustment of the braking force thereof. Adjustment of the braking force results in a corresponding adjustment of the tension in the inner course of the apron and this, in turn, results in a corresponding variation of the density of bales being formed in the baler. The braking mechanism according to the invention may be in the form of a slip clutch with one half thereof being fixedly coupled to the further sprocket means and the other half thereof being coupled to the frame.

In the preferred embodiment of the present invention the braking mechanism is in the form of a further drive means including clutch means and which is operatively coupled to the further sprocket means for driving said further sprocket means at a circumferential speed which is different from the circumferential speed induced by the first drive means to the first sprocket means; the clutch means being operable to disengage the further drive means from the further sprocket means whenever the tension in the inner course of the apron reaches a preset limit so that tension in said inner course is maintained. This preferred embodiment further also is characterized in that :

-the first and further sprocket means are rotated in the same direction; this direction being such that the inner course of the apron moves in the direction from the further sprocket means to the first sprocket means and

-the further drive means is operable to drive the further sprocket means at a circumferential speed which is slower than the circumferential speed induced by the first drive means to the first sprocket means. Preferably the differential between the circumferential speeds of the first and further sprocket means when driven by respectively the first and further drive means is in the range of 0,5 to 2 %. In the preferred embodiment of the present invention, the bale forming apron is formed of a pair of endless chains connected together at spaced intervals along their length by transverse members, and the first and second sprocket means comprise first and second pairs of drive sprockets, respectively, for engaging the apron chains.

The advantages of the invention will become apparent upon consideration of the following detailed disclosure of the invention, especially when taken in conjunction with the accompanying drawings, wherein :

Fig. 1 is a side elevation view of a round baler incorporating the apron tensioning system of the present invention;

Fig. 2 is an enlarged view of a lower portion of the round baler of Fig. 1 showing some of the components of the apron tensioning system of the present invention;

Fig. 3 is a sectional view taken along line 3-3 in Fig. 2; and

Fig. 4 is a schematic view of the round baler of Fig. 1 illustrating the relationship of various parts thereof during bale formation.

Any left and right references in the following description are used as a matter of convenience and are determined by standing at the rear of the machine and facing in the direction of operative travel. These terms as well as other terms such as "forward', "rearward", "upper", "lower", etc., which equally are used for convenience, are not intended to be limiting.

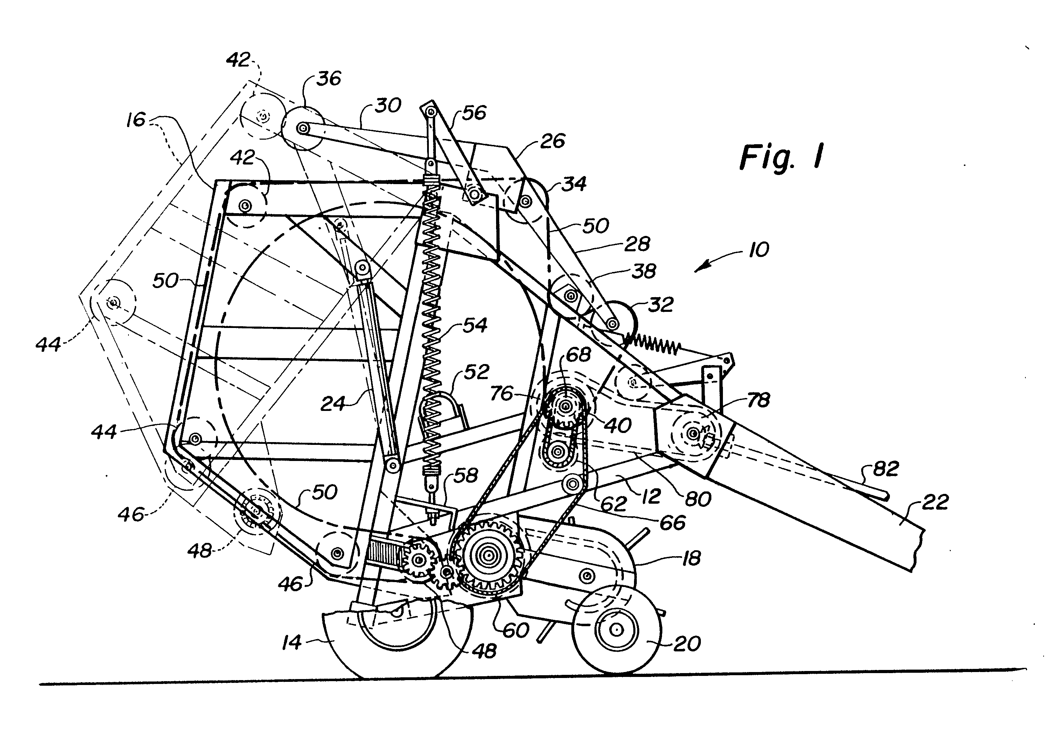

Referring to Fig. 1, a round baler 10 embodying the preferred embodiment of the present invention can be sen. This baler 10 includes a base frame 12 supported by a pair of wheels 14 and an auxiliary frame 16 pivotally connected to the base frame 12 in conventional manner. A pickup device 18 supported by wheels 20 is mounted on the base frame 12, and a tongue 22 is provided on the base frame 12 for connection to a tractor. Hydraulic cylinders 24 are connected between the base frame 10 and the auxiliary frame 16 for raising and lowering the auxiliary frame 16 in a known manner. The auxiliary frame 16 is shown in a partially raised position in phantom in Fig. 1.

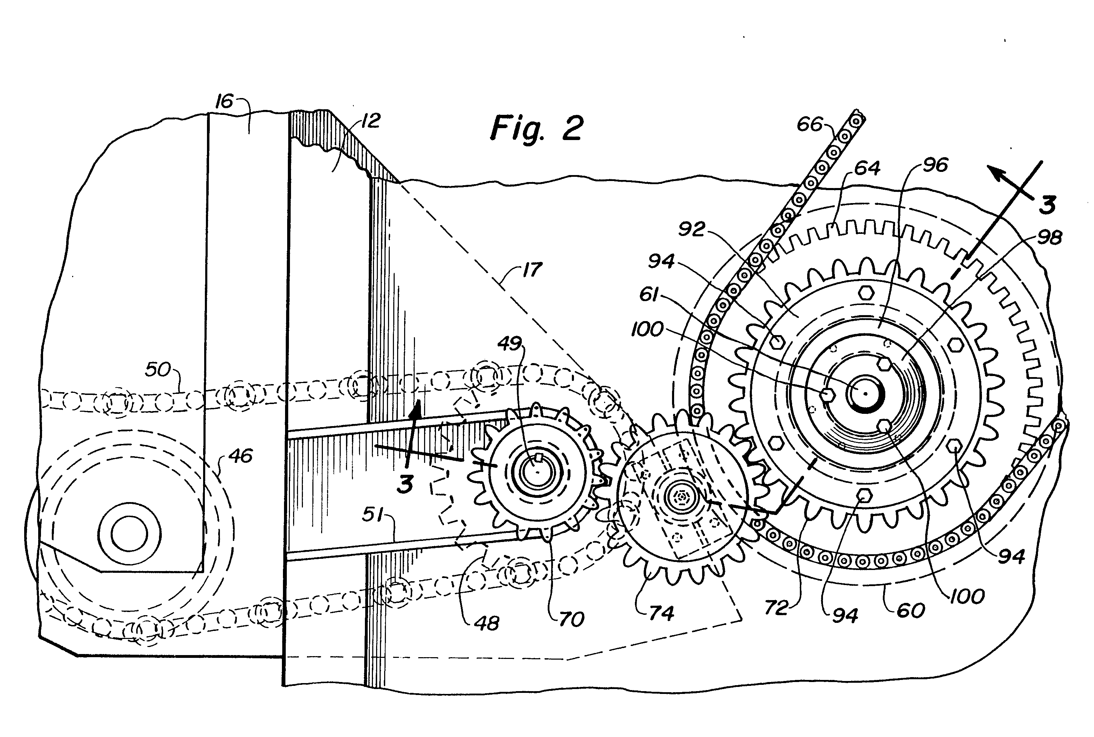

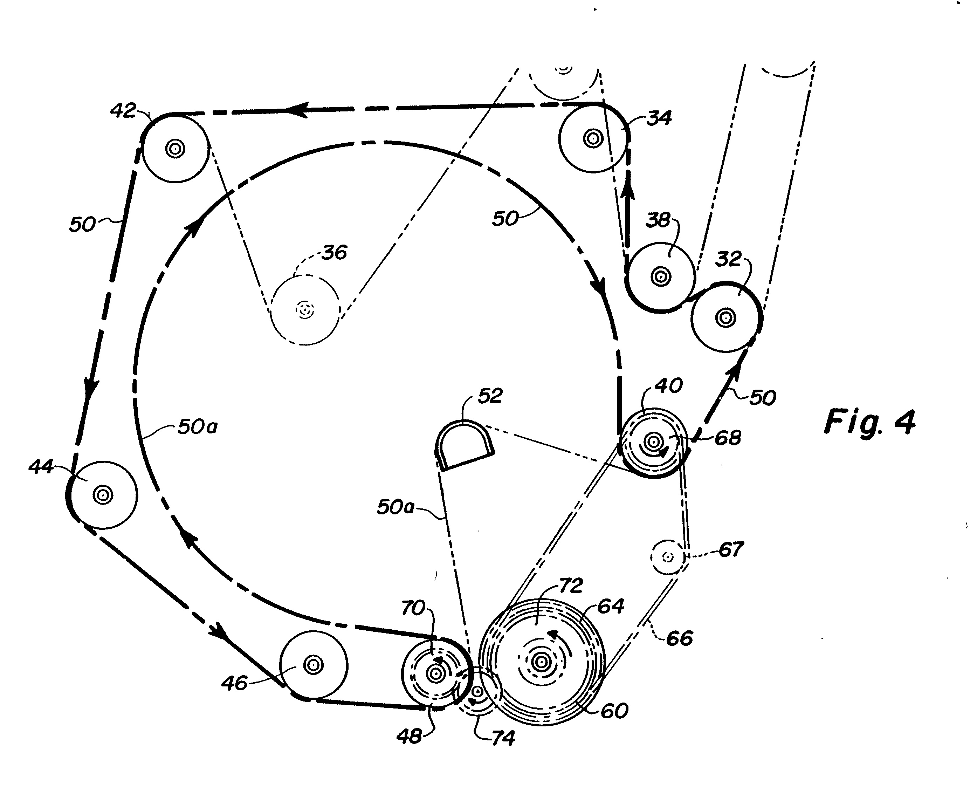

An arm assembly 26 is pivoted on the base frame 10 and includes front arms 28 carrying guide members 32,34 and rear arms 30 carrying guide members 36. Additional guide members 38 and drive sprockets 40 are carried on the base frame 10 while guide members 42,44,46 and drive sprockets 48 are carried on the auxiliary frame 16. As best seen in Fig. 2, sprockets 48 are rotatably mounted on forward extensions 17 of the auxiliary frame 16. A bale forming apron 50 is supported by the various aforementioned guide members and drive sprockets. The bale forming apron 50 preferably consists of a pair of endless chains connected together at spaced intervals along their length by transverse bars or slats. Cam guide members 52 are carried on the base frame 12 for, in a bale starting position and as is seen in Fig. 4, supporting an inner course 50a of the apron 50 which extends between sprockets 40 and 48 . Springs 54 are connected between levers 56 fixed to the arm assembly 26 and brackets 58 mounted on the base frame 12. The springs 54 serve to return the apron 50 to its bale starting position following formation and ejection of a roll bale. A floor roll 60 and a stripper roll 62 are provided on the base frame 12 to assist the apron 50 in bale formation.

According to the preferred embodiment of the present invention, a sprocket 64 fixed to the shaft 61 of the floor roll 60 is connected by a chain 66 to a sprocket 68 fixed to the shaft on which the sprockets 40 are mounted. A gear 70 is fixed to an extension 49 of the shaft on which the drive sprockets 48 are mounted, and a gear 72 is coupled to the sprocket 64. The base frame 12 is provided with a cavity 51 for receiving the shaft extension 49. The gears 70 and 72 are connected by an idler gear 74 carried on the base frame 12. The sprockets 40 are driven by sheaves 76,78 and a belt 80 from a drive shaft 82 connected to the PTO of a tractor. The sprocket 64 is rotated by the sprocket 68 via the chain 66, and the gear 70 is rotated by the gear 72 via the idler gear 74. The rotation of the sprocket 64 causes the floor roll 60 to rotate, and the rotation of the gear 70 drives the sprockets 48 which together with the sprockets 40 cause movement of the apron 50 in a predetermined path. The gears 70,72,74 are sized for driving the sprockets 48 at a slightly slower circumferential speed than the sprockets 40.

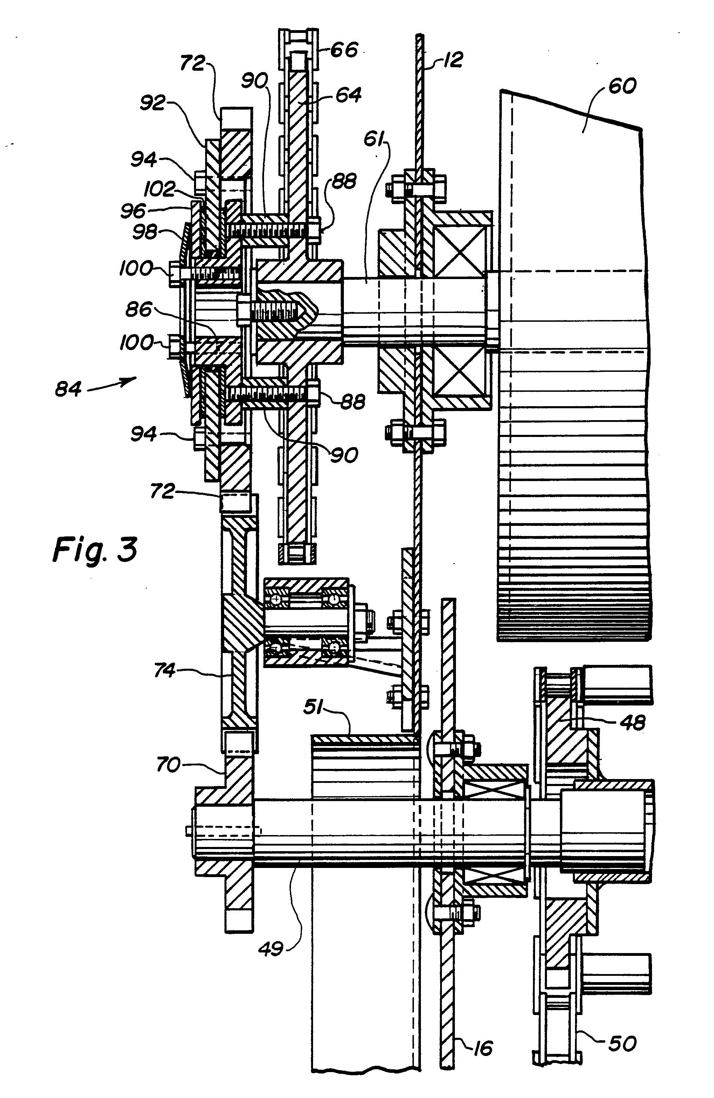

Referring to Figs. 2 and 3, it will be seen that the gear 72 is coupled to the sprocket 64 by a slip clutch assembly 84 including a hub 86 secured to the sprocket 64 by bolts 88 and spaced therefrom by spacers 90. A plate 92 is fastened to the gear 72 by bolts 94, and another plate 96 is held in engagement with the hub 86, e.g. via a splined coupling, by a spring washer 98 which is fastened to the hub 86 by bolts 100. Friction discs 102 are disposed between the plates 92 and 96 and between the plate 92 and the hub 86. The bolts 100 are tightened sufficiently to clamp the plate 92 between the friction discs 102 so that the plate 92 and the gear 72 will be rotated upon rotation of the sprocket 64. The discs 102 allow the plate 92 and the gear 72 to slip or become temporarily disengaged from rotation by the sprocket 64 whenever the gear 72 is overloaded.

In operation, the round baler 10 is towed across a field by a tractor and the pickup device 18 delivers crop material onto the upper surface of the rotating floor roller 60. The crop material is carried rearwardly by the floor roller 60 into engagement with the apron 50 which at the start of bale formation has the inner course 50a thereof extending, as seen in Fig. 4, generally upwardly from the sprockets 48 over the guide members 52 and then generally forwardly around the sprockets 40. As a bale is formed and increases in diameter, the inner course 50a of the apron 50 expands in length around the periphery of the bale. The expansion of the apron inner course 50a is permitted by rotation of the arm assembly 26 in a clockwise direction as viewed in Fig. 1. This clockwise rotation of the arm assembly 26 is not significantly resisted by the springs 54. Therefore, the springs 54 per se do not have any significant affect on the tension in apron 50 or on the density of bales formed in the round baler 10.

In accordance with the present invention, the inner course 50a of the apron 50 is maintained in tension during bale formation because the set of gears 70,72,74 tries to drive the sprockets 48 at a circumferential speed that is slightly slower than the circumferential speed at which the sprockets 40 are driven. This differential in speeds is preferably in the range of 0,5 to 2 %. Assuming the sprockets 40 and 48 have the same effective diameter and the nominal rotational speed of the sprockets 40 in the rante of e.g. 200 rpm, then the differential in the rotational speed of the sprockets 40 and 48 may be e.g. 1 or 2 rpm. When, during operation , the gear 72 becomes overloaded, the slip clutch assembly 84 is caused to momentarily disengage the gear 72 from the sprocket 64 in the manner already described. The gear 72 remains disengaged from the sprocket 64 for only a very short period of time (e.g., 1 to 2 seconds) before being reengaged to drive the sprockets 48 again. Conversely, the gear 72 remains engaged with the sprocket 64 for a comparable short period of time (e.g., 1 to 2 seconds) before being disengaged again. This constant engagement and disengagement of gear 72 by the slip clutch assembly 84 controls the tension in the apron inner course 50a and thereby also controls the density of bales formed in the round baler 10. The drive to the sprockets 48 including the slip clutch 84 thus effectively acts as a braking mechanism which tends to resist the driving force applied by the sprockets 40 to the apron inner course 50a and thus maintains the tension in said inner course 50a. It also will be appreciated by one skilled in the art that slippage of the clutch 84 increases when crop material is fed into the baler whereby the bale being formed gradually expands. This expansion of the bale is accomodated by the inner course 50a gradually becoming longer, which is possible only by extra slippage of the clutch 84.

The limit at which the slip clutch assembly 84 is set for disengagement of the gear 72 from the sprocket 64 may be adjusted by loosening or tightening the bolts 100 which respectively decreases or increases the force clamping the plate 92 between the friction discs 102. It is important that all three of the bolts 100 be set at the same torque.

When it is desired to discharge a completed bale from the round baler 10, the auxiliary frame 16 is raised by the hydraulic cylinders 24 as indicated in phantom in Fig. 1. The raising of the auxiliary frame 16 causes the gear 70 which is carried on the shaft extension 49 to be disengaged from the idler gear 74. This allows ejection of the bale. As the auxiliary frame 16 is subsequently lowered, the springs 54 urge the arm assembly 26 to rotate in a counterclockwise direction as viewed in Fig. 1 thereby returning the apron 50 to the bale starting position shown in phantom in Fig. 4.

An important feature of the tensioning system of the present invention is that only the inner course 50a of the apron 50 is under maximum tension during bale formation while the remainder of the apron 50 is under minimum tension from the springs 54. This provides longer life for the apron chains and permits reductions in the structural components of the baler frame.

It will be understood that the present invention provides an apron tensioning system for round balers which eliminates the need for large, expensive spring assemblies such as disclosed in U.S. Patent No. 4,343,141 and No. 4,426,833.

While the preferred structure, in which the principles of the present invention have been incorporated, is described above and is shown in the accompanying drawings, it is to be understood that the invention is not to be limited to the particular details of this preferred embodiment, but that, in fact, widely different means may be employed in the practice of the broader aspects of the invention. As an example, it will be appreciated by one skilled in the art that the invention essentially consists of a braking mechanism which is operatively coupled to the sprockets 48 and which tends to resist to the moving force applied by the sprockets 40 to the inner course 50a of the apron 50 to thereby maintain tension in said inner course 50a and thus to control the density of bales being formed in the baler. This braking mechanism, at least in theory, may be in the form of a slip clutch, one half of which is fixedly coupled to the sprockets 48 and the other half of which is coupled e.g. to the frame 12. A problem that possibly may be found with such an arrangement is the possible excessive heating up of the frictional members of the slip clutch because of the necessity to dissipate too much energy therein resulting from the large differential in speed between the halves of the slip clutch on the one hand and from the fact that, in operation, the clutch members slip continuously on the other hand. This possibly could be overcome by providing cooling means for the slip clutch. However, the preferred embodiment described above provides a much more elegant solution to this problem by ensuring that the differential in speed between the halves of the clutch is very much reduced and is only a small fraction of what this speed differential would be when one half of the clutch is held stationary by e.g. coupling this half to the frame 12. To this end, and as already explained above, the sprockets 48 therefore are driven at a circumferential speed which is about 0,5-2 % slower than the circumferential speed of the sprockets 40 so that the amount of slippage between the clutch halves and the amount of heat that has to be dissipated is reduced accordingly.

It further also will be appreciated that the braking mechanism preferably is adjustable in order to permit adjustment of the braking force thereof which results in a corresponding adjustment of the tension in the inner course 50a of the apron 50 and whereby a corresponding variation of the density of the bales being formed in the baler can be obtained.

## Claims

1. A roll baling machine (10) having :

-an apron (50) for forming roll bales of crop material;

-first and further sprocket means (40, 48) engaging said apron (50) at spaced-apart locations., said apron (50) having an inner course (50a) thereof extending between said first and further sprocket means (40, 48) for operative engagement with a bale being formed in the baler (10) and being expandable in length during bale formation; and

-drive means (76, 78, 80) operatively coupled to the first sprocket means (40) for driving said first sprocket means (40) to thereby move the apron in a predetermined direction,

characterized in that :

-braking means (68, 66, 64, 72, 74, 70, 84) are operatively coupled to the further sprocket means (48) in order to maintain tension in the inner course (50a) of the apron (50) to thereby control the density of bales formed in the baler (10).

2. A roll baling machine according to claim 1, characterized in that the braking mechanism (68, 66, 64, 72, 74, 70, 84) is adjustable in order to permit adjustment of the braking force thereof which results in a corresponding adjustment of the tension in the inner course (50a) of the apron (50) and which again, in turn, results in a corresponding variation of the density of bales being formed in the baler (10).

3. A roll baling machine according to claim 2 characterized in that the braking mechanism (68, 66, 64, 72, 74, 70, 84) is in the form of a slip clutch, one half of which is fixedly coupled to the further sprocket means (48) and the other half of which is coupled to the frame (12).

4. A roll baling machine according to claim 1 or 2 characterized in that the braking mechanism (68, 66, 64, 72, 74, 70, 84) is in the form of a further drive means (68, 66, 64, 72, 74, 70) including clutch means (84) and operatively coupled to the further sprocket means (48) for driving said further sprocket means (48) at a circumferential speed which is different from the circumferential speed induced by the first drive means (76, 78, 80) to the first sprocket means (40); the clutch means (84) being operable to disengage the further drive means (68, 66, 64, 72, 74, 70) from the further sprocket means (48) whenever the tension in the inner course (50a) of the apron (50) reaches a preset limit so that tension in said inner course (50a) is maintained.

5. A roll baling machine according to claim 4 characterized in that :

-the first and further sprocket means (40, 48) are rotated in the same direction; this direction being such that the inner course (50a) of the apron (50) moves in the direction from the further sprocket means (48) to the first sprocket means (40) and

-the further drive means (68, 66, 64, 72, 74, 70) is operable to drive the further sprocket means (48) at a circumferential speed which is slower than the circumferential speed induced by the first drive means (76, 78, 80) to the first sprocket means (40).

6. A roll baling machine according to claim 5 characterized in that the differential between the circumferential speeds of the first and further sprocket means (40, 48) when driven by respectively the first and further drive means (76, 78, 80/68, 66, 64, 72, 74, 70) is in the range of 0,5 to 2 %.

7. A roll baling machine according to any of the preceding claims characterized in that the drive means (76, 78, 80) for driving the first sprocket means (40) receive motive power from the PTO of a tractor.

8. A roll baling machine according to any of the claims 4 to 6 or claim 7 when appended either directly or indirectly to claim 4, characterized in that the further drive mens (68, 66, 64, 72, 74. 70) for driving the further sprocket means (48) is connected to the first drive means (76, 78, 80) for driving the first sprocket means (40).

9. A roll baling machine according to claim 8 and comprising :

-a base frame (12); and

-an auxiliary frame (16) pivotally mounted on the base frame (12) and being movable between a lowered bale forming position and a raised bale discharge position; the apron (50) being movably supported on both the base frame (12) and the auxiliary frame (16) between the first sprocket means (40) rotatably mounted on the base frame (12) and the further sprocket means (46) rotatably mounted on the auxiliary frame (16), and

characterized in that

the further drive means (68, 66, 64, 72, 74, 70) for driving the further sprocket means (48) comprise a set of gears (70, 74, 72) at least one (74) of which is rotatably mounted on the base frame (12) and at least another one (70) of which is rotatably mounted on the auxiliary frame (16); said gears (74, 70) operatively engaging with each other when the auxiliary frame (16) is in the lowered bale forming position and being disengaged when the auxiliary frame (16) is moved toward its raised bale discharge position.

10. A roll baling machine according to claim 9, characterized in that the clutch means (84) comprises a slip clutch, on half of which is connected to the first drive means (76, 78, 80) for driving the first sprocket means (40) and the other half of which is connected to one gear (72) of said set of gears (70, 72, 74); said clutch (84) permitting interruption of the power transfer by the further drive means (68, 66, 64, 72, 74, 70) to the further sprocket means (48) when the tension in the inner course (50a) of the apron reaches said preset limit.

11. A roll baling machine according to any of the preceding claims, characterized in that the apron (50) is formed by a pair of endless chains connected together at spaced intervals along the length thereof by transverse members, and the first and further sprocket means (40, 48) are formed by fitst and further pairs of drive sprockets engaging said chains.

*Fig. 1*

0 244 899

Fig. 2

*Fig. 3*

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 150 628 (DEERE)<br><br>* Page 3, paragraphs 5,6; page 4, paragraphs 1,2; pages 5-7; figures 1,2 *<br><br>----- | 1,2,4,<br>5,7,8 | A 01 F 15/00 |

**TECHNICAL FIELDS SEARCHED (Int. Cl.4)**

A 01 F

The present search report has been drawn up for all claims

| Place of search | Date of completion of the search | Examiner |
|---|---|---|
| THE HAGUE | 17-08-1987 | VERMANDER R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82